# FASCICULE DE BREVET EUROPEEN

(11) **EP 1 876 347 B1**
(45) Date de publication et mention de la délivrance du brevet: **01.10.2008**
(21) Numéro de dépôt: 07301037.3
(22) Date de dépôt: 14.05.2007
(51) Int. Cl.: F02F 7/00, F16J 15/06, F02F 11/00

(54) **Ensemble comportant des pièces à etancher et un joint métallique avec une partie de liaison frangible et moteur comportant un tel ensemble**
Anordnung, die abzudichtende Teile und eine Metalldichtung mit einem zerbrechlichen Verbindungsteil umfasst, und eine solche Anordnung umfassender Motor
Assembly comprising sealing parts and a metal gasket with a frangible linking part and motor comprising such an assembly

(30) Priorité: 03.07.2006 FR 0605984
(43) Date de publication de la demande: 09.01.2008
(73) Titulaire: RENAULT S.A.S., 92100 Boulogne Billancourt (FR)
(72) Inventeur: Amiri, Zakaria, 75017, Paris (FR); Connan, Edouard, 28300, Mainvilliers (FR)

(56) Documents cités:
- EP-A- 1 215 376
- DE-C1- 4 015 409
- US-A1- 5 529 313

## Description

La présente invention concerne un ensemble de pièces de moteur à combustion interne qui comporte un organe à étancher, une première et une deuxième pièces à étancher aptes à être assemblées avec ledit organe et démontables indépendamment l'une de l'autre, et qui comporte un joint plat métallique comprenant, d'une part, au moins deux parties d'étanchéité dont une première partie d'étanchéité apte à être serrée entre ledit organe et ladite première pièce et une deuxième partie d'étanchéité apte à être serrée entre ledit organe et ladite deuxième pièce et, d'autre part, au moins une partie de liaison entre les parties d'étanchéité.

L'invention concerne également un moteur à combustion interne comportant un tel ensemble.

### ARRIERE-PLAN TECHNOLOGIQUE

On connaît des moteurs à combustion interne qui comportent un bloc cylindres auquel sont fixées, d'une part, une pompe apte à faire circuler un liquide de refroidissement à travers un circuit de refroidissement intégré dans le bloc cylindres et, d'autre part, un couvercle de vilebrequin qui protège l'extrémité du vilebrequin.

Cette pompe et le couvercle du vilebrequin sont chacun fixés par un support de fixation sur une même face du bloc cylindres, appelée face de distribution.

Le circuit de refroidissement débouche sur la face de distribution. La pompe est centrée via son support de fixation sur l'embouchure du circuit de refroidissement de manière à pouvoir faire circuler le liquide de refroidissement à travers le circuit de refroidissement intégré dans le bloc cylindres. L'étanchéité doit donc être assurée entre le bloc cylindres et la pompe autour de l'embouchure pour éviter toute fuite du liquide de refroidissement.

Le couvercle de vilebrequin est fixé sur la face de distribution sous la pompe à proximité du vilebrequin. Pour la bonne lubrification des parties en mouvement du vilebrequin, la partie du moteur située sous le bloc cylindres, appelée communément carter d'huile, baigne dans l'huile. Le vilebrequin s'étend le long du bloc cylindres et son extrémité dépasse de la face de distribution. Le couvercle de vilebrequin recouvre l'extrémité du vilebrequin et limite ainsi l'altération, par des poussières et/ou l'air extérieur, de l'huile qui se trouve à proximité de l'extrémité du vilebrequin. L'étanchéité doit donc également être assurée entre le bloc cylindres et le couvercle pour limiter les fuites d'huiles et son altération.

Pour assurer l'étanchéité entre d'une part, le bloc cylindres et, d'autre part, la pompe et le couvercle de vilebrequin, il est possible de monter entre ces pièces deux joints plats métalliques distincts. Un des deux joints plats métalliques est serré entre le bloc cylindres et le couvercle, et l'autre joint plat est serré entre le bloc cylindres et la pompe autour de l'embouchure du circuit de refroidissement. Mais le temps de montage et le coût de production de plusieurs joints plats métalliques est important.

Un autre ensemble de pièces de moteur à combustion interne étancher est connu de EP 1 215 376 A2.

Il est également connu d'utiliser un seul joint plat métallique qui comporte deux parties d'étanchéité reliées entre elles par une partie de liaison. Cependant, lorsqu'une des deux pièces, la pompe ou le couvercle de vilebrequin, doit être remplacée, il est nécessaire de changer le joint plat métallique avec lequel la pièce à remplacer était en contact, même si le joint plat métallique n'est pas défectueux. En effet, c'est lors du montage de ces pièces sur le bloc cylindres que le joint plat métallique est écrasé et assure sa fonction d'étanchéité. Un montage de la nouvelle pièce sur le même joint plat métallique dégraderait l'étanchéité entre la nouvelle pièce et le bloc cylindres. En outre, pour enlever le joint plat métallique, il est nécessaire de démonter à la fois la pompe et le couvercle.

De même, lorsqu'une seule partie d'étanchéité du joint plat métallique est défectueuse, il est nécessaire de remplacer tout le joint plat métallique et, pour ce faire, la pompe et le couvercle de vilebrequin doivent être tous deux démontés.

Le remplacement d'un tel joint plat métallique est ainsi compliqué et coûteux.

### OBJET DE L'INVENTION

Le but de la présente invention est de simplifier le remplacement du joint plat métallique.

A cet effet, l'invention propose un ensemble de pièces de moteur à combustion interne qui comporte un organe à étancher, une première et une deuxième pièces à étancher aptes à être assemblées avec ledit organe et démontables indépendamment l'une de l'autre, et qui comporte un joint plat métallique comprenant, d'une part, au moins deux parties d'étanchéité dont une première partie d'étanchéité apte à être serrée entre ledit organe et ladite première pièce et une deuxième partie d'étanchéité apte à être serrée entre ledit organe et ladite deuxième pièce et, d'autre part, au moins une partie de liaison entre les parties d'étanchéité, dans lequel la partie de liaison comporte au moins une zone frangible.

La pose du joint sur les première et deuxième pièces est réalisée en une fois puisque les deux partie d'étanchéité font partie du même joint plat. Un seul poste de montage du joint plat est donc nécessaire et le temps de montage est de ce fait réduit. Il n'est besoin que d'un seul joint pour étancher deux partie distinctes.

Grâce au joint plat métallique selon l'invention, lorsqu'une pièce à étancher doit être remplacée ou lorsqu'une partie d'étanchéité du joint elle-même est défectueuse, l'opérateur peut désolidariser les parties d'étanchéité du joint plat en rompant la zone frangible de la partie de liaison. L'opérateur démonte alors seulement la pièce à étancher concernée et ne remplace que la partie d'étanchéité du joint plat correspondante.

La partie d'étanchéité défectueuse du joint plat ou correspondant à la pièce à étancher démontée peut ainsi être supprimée tandis que l'autre partie d'étanchéité du joint plat peut rester en place.

Il en résulte que le remplacement de la pièce à étancher et de la partie d'étanchéité correspondante du joint plat est simplifié et que le temps d'intervention de l'opérateur pour réaliser ce remplacement est réduit.

En outre, les coût de fabrication du joint plat sont limités puisqu'un seul joint plat est utilisé pour deux zones à étancher. De même, le coût de remplacement du joint est également limité puisque la partie d'étanchéité défectueuse peut être remplacée par une partie d'étanchéité équivalente d'un autre joint plat identique dont on prend la partie d'étanchéité souhaitée en rompant sa zone frangible. La partie d'étanchéité restante de l'autre joint plat peut être utilisée ultérieurement pour un autre remplacement.

Selon une première caractéristique avantageuse de l'invention, ledit organe est constitué par un bloc cylindres d'un moteur à combustion interne d'un véhicule automobile.

Selon une autre caractéristique avantageuse de l'invention, les première et deuxième pièces sont destinées à être montées sur une même face du bloc cylindres.

Selon une autre caractéristique avantageuse de l'invention, les première et deuxième pièces sont, respectivement, une pompe pour un circuit de refroidissement du moteur et un couvercle d'un vilebrequin.

Selon une autre caractéristique avantageuse de l'invention, le bloc cylindres intégrant au moins une partie du circuit de refroidissement qui débouche sur la face du bloc cylindres destinée à recevoir la pompe, la première partie d'étanchéité comporte une ouverture centrale de passage du liquide de refroidissement du circuit de refroidissement destinée à venir lors du montage du joint plat en regard, d'une part, de l'embouchure du circuit de refroidissement et, d'autre part, d'une volute de la pompe, de manière à assurer l'étanchéité entre le bloc cylindres et la pompe autour de l'embouchure.

Selon une autre caractéristique avantageuse de l'invention, l'extrémité du vilebrequin, disposé sous le bloc cylindres, dépassant de la face de montage du couvercle de vilebrequin, la face de montage du couvercle de vilebrequin comporte une ouverture de passage de l'extrémité du vilebrequin et la deuxième partie d'étanchéité s'étend autour de l'ouverture de passage de l'extrémité du vilebrequin.

Selon une autre caractéristique avantageuse de l'invention, ladite zone frangible est formée par un prédécoupage en pointillés de la partie de liaison.

Selon une autre caractéristique avantageuse de l'invention, ladite zone frangible s'étend selon une direction sensiblement perpendiculaire à la direction d'alignement des deux parties d'étanchéité.

L'invention concerne également un moteur à combustion interne comportant un ensemble tel que décrit ci-dessus.

### DESCRIPTION DETAILLEE D'UN EXEMPLE DE REALISATION

La description qui va suivre en regard des dessins annexés d'un mode de réalisation, donné à titre d'exemple non limitatif, fera bien comprendre en quoi consiste l'invention et comment elle peut être réalisée.

Dans les dessins annexés :
- la figure 1 est une vue éclatée d'un bloc cylindres, d'un joint plat métallique selon l'invention, et de deux pièces à étancher.
- La figure 2 est une vue de face du joint plat métallique selon l'invention en position sur le bloc cylindres.

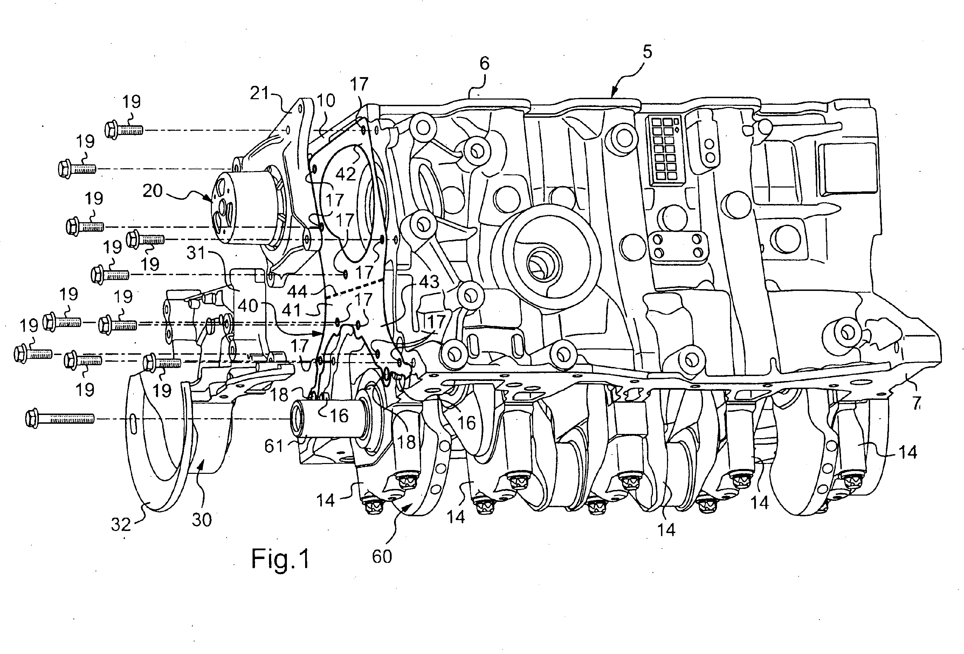

Sur la figure 1, on a représenté un bloc cylindres 5 et un vilebrequin 60 d'un moteur à combustion interne d'un véhicule automobile. Le bloc cylindres 5 comporte une face supérieure 6 située du côté de la tête des cylindres et sur laquelle est destinée à être rapportée une culasse. Il comporte également une face inférieure 7 opposée situe à proximité du vilebrequin 60 du moteur. La partie inférieure du bloc cylindres comporte des logements 14 des tourillons du vilebrequin 60.

Le bloc cylindres 5 comporte également une face latérale 10, appelée face de distribution, orientée vers des éléments de distribution du moteur tel qu'une chaîne de transmission (non représentée) et une pompe 20. La face de distribution est ici sensiblement plane.

La pompe 20 est entraînée par la chaîne de distribution qui est elle-même entraînée par le vilebrequin 60, par l'intermédiaire d'un jeu de pignons (non représentés) disposés sur l'extrémité 61 libre du vilebrequin. La pompe 20 permet de faire circuler un liquide de refroidissement, ici de l'eau, dans un circuit de refroidissement 13 du moteur. Le circuit de refroidissement 13 traverse le bloc cylindres 5 et débouche hors de la face de distribution 10 pour être relié à la pompe 20. La pompe 20 est rapportée sur le bloc cylindres 5 et centrée sur l'embouchure 11 circuit de refroidissement 13 au moyen d'un support de fixation 21 de manière à faire circuler l'eau dans le circuit de refroidissement 13.

Le vilebrequin 60 du moteur est disposé sous le bloc cylindres 5 le long des logements 14 des tourillons, c'est-à-dire selon une direction sensiblement normale au plan de la face de distribution 10 du bloc cylindres 5.

Un carter inférieur (non représenté) est disposé sous et rapporté sur le bloc cylindres autour du vilebrequin. Le carter inférieur accueille un bain d'huile de telle sorte que le vilebrequin baigne dans l'huile pour assurer la lubrification de ses parties en mouvement. Le vilebrequin 60 s'étend au-delà de cette face de distribution 10. Pour limiter l'altération de l'huile par les poussière et l'air, ainsi que les fuites d'huile, il est alors prévu un couvercle 30 de vilebrequin qui couvre l'extrémité 61 du vilebrequin 60 dépassant du plan de la face de distribution 10. Ce couvercle 30 permet de fermer le carter inférieur à proximité de l'extrémité 61 du vilebrequin 60 et ainsi d'isoler l'huile contenue dans le carter inférieur du moteur.

Ce couvercle 30 est rapporté sur la partie inférieure de la face de distribution 10 du bloc cylindres au moyen d'un support de fixation 31. Ici, la partie inférieure de la face de distribution 10 du bloc cylindres 5 comporte une ouverture de passage 12 sensiblement en forme demi-cercle, ouverte sur la face inférieure 7 du bloc cylindres. L'extrémité 61 du vilebrequin 60 traverse cette ouverture de passage 12 et est couverte par le couvercle 30. Le support de fixation 31 du couvercle 30 s'étend donc autour de l'ouverture de passage 12 de l'extrémité 61 du vilebrequin 60.

Le couvercle 30 de vilebrequin comporte également sur sa partie inférieure un flasque 32 apte à protéger le jeu de pignons et la chaîne de transmission entraînée par le vilebrequin 60.

Pour assurer l'étanchéité entre, d'une part, le bloc cylindres 5 et la pompe 20 et, d'autre part, le bloc cylindres 5 et le couvercle 30 de vilebrequin, il est prévu un joint plat 40 métallique qui comporte deux parties d'étanchéité 42, 43 reliées entre elles par une partie de liaison 41. Ce joint plat 40 métallique est monté entre, d'une part, le bloc cylindres 5, sur sa face de distribution 10, et, d'autre part, les supports de fixation 21, 31 de la pompe 20 et du couvercle de vilebrequin 30.

La pompe et le couvercle sont démontables indépendamment l'un de l'autre. C'est-à-dire que pour démonter une de ces deux pièces du bloc cylindres, il n'est pas nécessaire de démonter l'autre pièce.

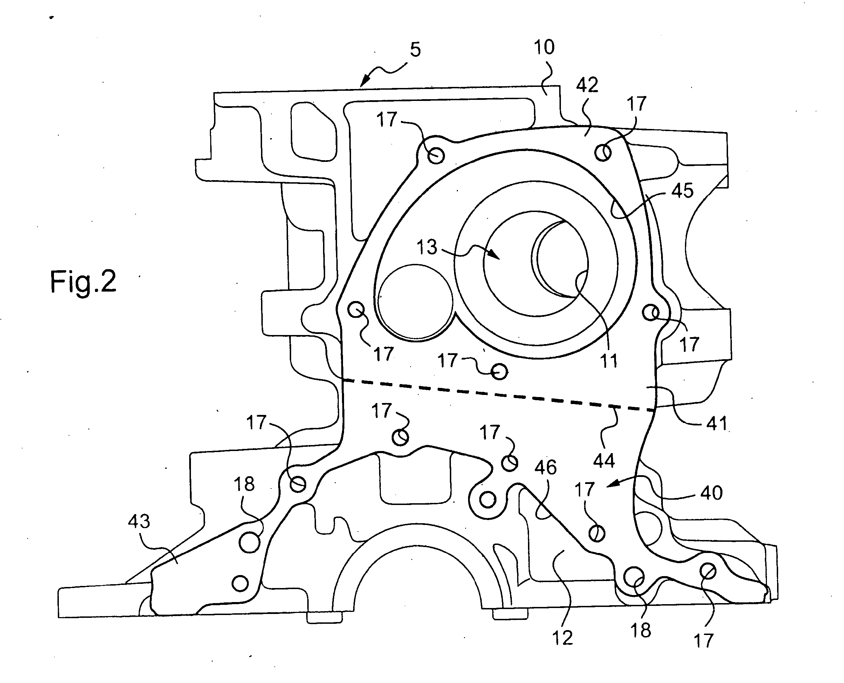

Comme représenté sur les figures 1 et 2, pour le montage du joint plat, le bloc cylindres comporte sur sa face de distribution deux éléments de centrage 16 et des logements destinés à recevoir des vis de fixation 19. Le joint plat comporte deux ouvertures de centrage 18 destinées à être traversées par les éléments de centrage 16, ainsi que des ouvertures de positionnement 17 destinées à être traversées par les vis de fixation 19. Enfin, la pompe 20 et le couvercle 31 comportent également sur leur support de fixation 21, 31 des ouvertures de montage destinées à être traversées par les vis de fixation 19 et les éléments de centrage 16.

La première partie d'étanchéité 42 comporte une ouverture centrale 45, de passage de l'eau du circuit de refroidissement destinée à venir lors du montage du joint plat 40 en regard, d'une part, de l'embouchure 11 du circuit de refroidissement et, d'autre part, d'une volute (non représentée) de la pompe 20, de manière à assurer l'étanchéité entre le bloc cylindres 5 et la pompe 20 autour de l'embouchure 11.

La deuxième partie d'étanchéité 43 présente une forme sensiblement en demi-cercle qui définit une ouverture 46. Cette ouverture 46 de la deuxième partie d'étanchéité 43 est disposée autour de l'ouverture de passage 12 de l'extrémité du vilebrequin de manière à assurer l'étanchéité entre le bloc cylindres 5 et le couvercle 30 de vilebrequin autour de l'ouverture de passage 12.

Avantageusement selon l'invention la partie de liaison 41 du joint plat 40 métallique comporte une zone sécable, encore appelée zone frangible 44, c'est-à-dire une zone qui est susceptible d'être rompue. Cette zone frangible 44 est une zone fragilisée par rapport au reste du joint plat métallique qui, au delà d'un certain effort, se rompt sans altérer les propriétés d'étanchéité des parties d'étanchéité. C'est-à-dire que la partie d'étanchéité qui n'est pas à changer, n'est ni déplacée, ni déformée par la rupture de la zone frangible.

Comme représenté sur la figure 2, la zone frangible 44 de la partie de liaison 41 peut être obtenue par des poinçonnages rapprochés et répétés de la partie de liaison 41 selon une ligne de séparation des deux parties d'étanchéité 42, 43. La direction de cette ligne de séparation est sensiblement perpendiculaire à la celle de la droite passant par le centre des deux ouvertures 45, 46 des parties d'étanchéité 42, 43.

Le prédécoupage est pratiqué sur la partie de liaison 41 car celle-ci n'a pas de fonction d'étanchéité et n'est donc pas serrée entre deux pièces. L'opérateur peut ainsi aisément rompre la zone frangible 44 pour désolidariser les deux parties d'étanchéité 42, 43.

Le prédécoupage est réalisé en même temps que le joint plat 40 métallique. Ici, ce joint plat métallique est obtenu par un procédé de découpage par emboutissage.

Pour rompe la zone frangible 44 de la partie de liaison 41, on peut exercer un effort de traction sur la partie d'étanchéité 42, 43 à remplacer, sensiblement perpendiculairement à la direction moyenne de la zone frangible 44. Cet effort provoque la rupture de la zone frangible 44. Il est ainsi permis de détacher la partie d'étanchéité 42, 43 à remplacer de l'autre partie d'étanchéité 42, 43 qui n'a pas besoin d'être remplacée. Il est également possible de détruire la zone frangible de la partie de liaison au moyen d'un outil adapté tel qu'un outil de coupe par exemple.

Pour pouvoir aisément rompre la zone frangible 44 sans risque d'altérer les parties d'étanchéité 42, 43, cette zone frangible est située à une distance suffisante entre les deux parties d'étanchéité 42, 43.

En pratique, lorsque des deux pièces - la pompe ou le couvercle de vilebrequin - doivent être remplacés, voire simplement démontés, ou encore lorsqu'une partie d'étanchéité du joint est défectueuse, l'opérateur désolidarise les parties d'étanchéité du joint plat en rompant la zone frangible de la partie de liaison. L'opérateur démonte alors seulement la pièce concernée et ne remplace que la partie d'étanchéité du joint plat correspondante. L'autre partie d'étanchéité du joint plat reste en place. Enfin, l'opérateur procède au remontage de la pièce qu'il a démonté ou au montage de la nouvelle pièce.

Le prédécoupage peut être rectiligne ou de forme quelconque du moment qu'il permet de détacher aisément les deux parties d'étanchéité.

En variante, on peut prévoir que chaque zone frangible soit formée par des encoches sur les bords de la partie de liaison. Ces encoches jouent alors le rôle d'amorces de rupture.

En variante, le joint tel que décrit ci-dessus peut être disposé entre un organe à étancher, autre que le bloc cylindres, et des pièces à étancher rapportées sur l'organe et démontables indépendamment l'une de l'autre, autres que la pompe et le couvercle. Le joint peut ainsi par exemple servir à étancher des parties de la culasse du moteur sur laquelle sont rapportées d'autres pièces à étancher.

En outre, l'organe à étancher peut être constitué de plusieurs pièces elles même démontables indépendamment l'une de l'autre. On peut également prévoir que chaque partie du joint plat soit serrée entre deux pièces à étancher, chacune des deux pièces étant démontables indépendamment des deux autres pièces entre lesquelles est serrée l'autre partie d'étanchéité.

## Revendications

1. Ensemble de pièces de moteur à combustion interne qui comporte un organe (5) à étancher, une première et une deuxième pièces (20, 30) à étancher aptes à être assemblées avec ledit organe (5) et démontables indépendamment l'une de l'autre, et qui comporte un joint plat (40) métallique comprenant, d'une part, au moins deux parties d'étanchéité (42, 43) dont une première partie d'étanchéité (42) apte à être serrée entre ledit organe (5) et ladite première pièce (5, 20) et une deuxième partie d'étanchéité (43) apte à être serrée entre ledit organe (5) et ladite deuxième pièce (30) et, d'autre part, au moins une partie de liaison (41) entre les parties d'étanchéité (42, 43), **caractérisé en ce que** la partie de liaison (41) comporte au moins une zone frangible (44).

2. Ensemble selon la revendication précédente, **caractérisé en ce que** ledit organe (5) est constitué par un bloc cylindres (5).

3. Ensemble selon la revendication précédente, **caractérisé en ce que** les première et deuxième pièces (20, 30) sont destinées à être montées sur une même face (10) du bloc cylindres.

4. Ensemble selon l'une des revendications précédentes, **caractérisé en ce que** les première et deuxième pièces (20, 30) sont, respectivement, une pompe (20) pour un circuit de refroidissement (13) du moteur et un couvercle (30) d'un vilebrequin (60).

5. Ensemble selon la revendication précédente, **caractérisé en ce que**, le bloc cylindres (5) intégrant au moins une partie du circuit de refroidissement (13) qui débouche sur la face (10) du bloc cylindres (5) destinée à recevoir la pompe, la première partie d'étanchéité (42) comporte une ouverture centrale (45) de passage du liquide de refroidissement du circuit de refroidissement (13) destinée à venir lors du montage du joint plat (40) en regard, d'une part, de l'embouchure (11) du circuit de refroidissement (13) et, d'autre part, d'une volute de la pompe (20), de manière à assurer l'étanchéité entre le bloc cylindres (5) et la pompe (20) autour de l'embouchure (11).

6. Ensemble selon l'une des deux revendications précédentes, **caractérisé en ce que**, l'extrémité (61) du vilebrequin (60), disposé sous le bloc cylindres (5), dépassant de la face (10) de montage du couvercle (30) de vilebrequin, la face (10) de montage du couvercle (30) de vilebrequin comporte une ouverture de passage (12) de l'extrémité (61) du vilebrequin (60) et **en ce que** la deuxième partie d'étanchéité (43) s'étend autour de l'ouverture de passage (12) de l'extrémité (61) du vilebrequin (60).

7. Ensemble selon l'une des revendications précédentes, **caractérisé en ce que** ladite zone frangible (44) est formée par un prédécoupage en pointillés de la partie de liaison (41).

8. Ensemble selon l'une des revendications précédentes, **caractérisé en ce que** ladite zone frangible (44) s'étend selon une direction sensiblement perpendiculaire à la direction d'alignement des deux parties d'étanchéité (42, 43).

9. Moteur à combustion interne comportant un ensemble selon l'une des revendications précédentes.

## Claims

1. Internal combustion engine parts assembly which comprises a component (5) that is to be sealed, a first and a second part (20, 30) that are to be sealed which can be assembled with the said component (5) and removed independently of one another, and which comprises a flat metal gasket (40) comprising, on the one hand, at least two sealing portions (42, 43) of which a first sealing portion (42), capable of being clamped between the said component (5) and the said first part (5, 20) and a second sealing portion (43) capable of being clamped between the said component (5) and the said second part (30) and, on the other hand, at least one connecting portion (41) connecting the sealing portions (42, 43), **characterized in that** the connecting portion (41) comprises at least one frangible region (44).

2. Assembly according to the preceding claim, **characterized in that** the said component (5) consists of a cylinder block (5).

3. Assembly according to the preceding claim, **characterized in that** the first and second parts (20, 30) are intended to be mounted on one and the same face (10) of the cylinder block.

4. Assembly according to one of the preceding claims, **characterized in that** the first and second parts (20, 30) are, respectively, a pump (20) for an engine cooling circuit (13) and a cover (30) for a crankshaft (60).

5. Assembly according to the preceding claim, **characterized in that**, with the cylinder block (5) incorporating at least part of the cooling circuit (13) which opens onto that face (10) of the cylinder block (5) that is intended to accept the pump, the first sealing portion (42) comprises a central opening (45) for the passage of cooling liquid from the cooling circuit (13) which opening is intended, when the flat gasket (40) is fitted, to face firstly the mouth (11) of the cooling circuit (13) and, secondly, a volute casing of the pump (20), so as to provide sealing between the cylinder block (5) and the pump (20) around the mouth (11).

6. Assembly according to one of the two preceding claims, **characterized in that**, with that end (61) of the crankshaft (60) that lies under the cylinder block (5) protruding beyond the face (10) on which the crankshaft cover (30) is fitted, the face (10) on which the crankshaft cover (30) is fitted comprises an opening (12) through which the end (61) of the crankshaft (60) can pass, and **in that** the second sealing portion (43) extends around the opening (12) through which the end (61) of the crankshaft (60) can pass.

7. Assembly according to one of the preceding claims, **characterized in that** the said frangible region (44) is formed by a line of perforations across the connecting portion (41).

8. Assembly according to one of the preceding claims, **characterized in that** the said frangible region (44) extends in a direction substantially perpendicular to the direction of alignment of the two sealing parts (42, 43).

9. Internal combustion engine comprising an assembly according to one of the preceding claims.

## Patentansprüche

1. Einzelteilesatz einer Brennkraftmaschine, der eine abzudichtende Einheit (5), ein erstes und zweites abzudichtendes Einzelteil (20, 30), die dazu geeignet sind, mit der Einheit (5) zusammengebaut zu werden, und unabhängig voneinander ausgebaut werden können, umfasst, und der eine metallische Dichtungsscheibe (40) umfasst, die einerseits mindestens zwei Dichtungsteile (42, 43), von denen der erste Dichtungsteil (42) dazu geeignet ist, zwischen der Einheit (5) und dem ersten Einzelteil (5, 20) eingeklemmt zu werden, und einen zweiten Dichtungsteil (43), der dazu geeignet ist, zwischen der Einheit (5) und dem zweiten Teil (30) eingeklemmt zu werden, und andererseits mindestens einen Verbindungsteil (41) zwischen den Dichtungsteilen (42, 43) umfasst, **dadurch gekennzeichnet, dass** der Verbindungsteil (41) mindestens einen zerbrechlichen Bereich (44) umfasst.

2. Satz gemäß dem vorhergehenden Anspruch, **dadurch gekennzeichnet, dass** die Einheit (5) aus einem Zylinderblock (5) besteht.

3. Satz gemäß dem vorhergehenden Anspruch, **dadurch gekennzeichnet, dass** die ersten und zweiten Einzelteile (20, 30) dazu gedacht sind, auf derselben Seite (10) des Zylinderblocks eingebaut zu werden.

4. Satz gemäß einem der vorhergehenden Ansprüche, **dadurch gekennzeichnet, dass** die ersten und zweiten Einzelteile (20, 30) jeweils eine Pumpe (20) für das Kühlsystem (13) des Motors und ein Deckel (30) einer Kurbelwelle (60) sind.

5. Satz gemäß dem vorhergehenden Anspruch, **dadurch gekennzeichnet, dass** der Zylinderblock (5) mindestens einen Teil des Kühlsystems (13) integriert, der auf der Seite (10) des Zylinderblocks (5) mündet, die dazu gedacht ist, die Pumpe aufzunehmen, der erste Dichtungsteil (42) eine mittlere Öffnung (45) zum Durchfluss der Kühlflüssigkeit des Kühlsystems (13) umfasst, die dazu gedacht ist, beim Einbau der Dichtungsscheibe (40) einerseits gegenüber der Mündung (11) des Kühlsystems (13) und andererseits gegenüber einem Spiralgehäuse der Pumpe (20) zu liegen, um die Dichtigkeit zwischen dem Zylinderblock (5) und der Pumpe (20) um die Mündung (11) herum sicherzustellen.

6. Satz gemäß einem der beiden vorhergehenden Ansprüche, **dadurch gekennzeichnet, dass** das Ende (61) der unter dem Zylinderblock (5) angeordneten Kurbelwelle (60) über die Seite (10) zum Einbau des Deckels (30) der Kurbelwelle hinausgeht, die Seite (10) zum Einbau des Deckels (30) der Kurbelwelle eine Durchgangsöffnung (12) des Endes (61) der Kurbelwelle (60) umfasst, und dass der zweite Dichtungsteil (43) sich um die Durchgangsöffnung (12) des Endes (61) der Kurbelwelle (60) herum erstreckt.

7. Satz gemäß einem der vorhergehenden Ansprüche, **dadurch gekennzeichnet, dass** der zerbrechliche Bereich (44) aus einer punktierten Vorstanzung des Verbindungsteils (41) gebildet wird.

8. Satz gemäß einem der vorhergehenden Ansprüche,
**dadurch gekennzeichnet, dass** der zerbrechliche Bereich (44) sich in einer Richtung erstreckt, die im Wesentlichen zur Richtung der Ausrichtung der beiden Dichtungsteile (42, 43) rechtwinklig ist.

9. Brennkraftmaschine, umfassend einen Satz gemäß einem der vorhergehenden Ansprüche.
